# EUROPÄISCHE PATENTANMELDUNG

(11) **EP 1 219 479 A1**
(43) Veröffentlichungstag der Anmeldung: **03.07.2002**
(21) Anmeldenummer: 01130143.9
(22) Anmeldetag: 19.12.2001
(51) Int. Cl.: B60J 1/18, B60J 7/047

(54) **Schwenkbare und verschiebbare Heckscheibe**

(30) Priorität: 29.12.2000 DE 10065248
(71) Anmelder: Webasto Vehicle Systems International GmbH, 82131 Stockdorf (DE)
(72) Erfinder: Miklosi, Stefan, 81247 München (DE); Jardin, Hans, 82266 Bachern (DE); Birndorfer, Robert, 82362 Weilheim (DE)
(74) Vertreter: Wiese, Gerhard

(57) **Zusammenfassung**

Die Erfindung betrifft eine schwenkbare und verschiebbare Heckscheibe (5) an einer Karosserie eines Fahrzeugs, deren Verschiebebewegung mittels eines elektrischen Antriebs (über Antriebskabel 32) erfolgt. Die Mechanik der Heckscheibe sieht vor, daß die Heckscheibe (5) mit dem Antrieb bei geschlossener oder verschobener Heckscheibe (5) über wenigstens ein in einer dachfesten Führungsschiene (24) verschiebbar geführtes Kupplungselement (Mitnehmer 36, Antriebszapfen 29) und ein mit der der Heckscheibe verbundenes Gegen- Kupplungselement (Bügel 30, Aussparung 30A) gekoppelt ist, das für eine Schwenkbewegung der Heckscheibe (5) vom Kupplungselement (36, 29) lösbar ist. Durch die Entkopplung vom Verschiebeantrieb kann dieser stationär ausgeführt sein, wodurch der Aufbau der Mechanik wesentlich vereinfacht wird.

## Beschreibung

Die Erfindung betrifft eine schwenkbare und verschiebbare Heckscheibe gemäß dem Oberbegriff des Patentanspruchs 1.

Aus der DE 199 08 253 A1 ist eine derartige Heckscheibe bekannt, bei der die Verschiebebewegung mittels eines elektrischen Antriebs erfolgt. Die Verschwenkbarkeit der Heckscheibe ist dort nur sehr allgemein offenbart. Eine konkrete Mechanik, mittels der eine Schwenkbewegung losgelöst vom Verschiebeantrieb realisierbar ist, ist nicht offenbart.

Der vorliegenden Erfindung liegt die Aufgabe zugrunde, eine schwenkbare und verschiebbare Heckscheibe mit einer zur Durchführung beider Bewegungen geeigneten Mechanik zu schaffen.

Diese Aufgabe wird durch die Merkmale des Patentanspruchs 1 gelöst. Vorteilhafte Ausgestaltungen der Erfindung sind den Unteransprüchen zu entnehmen.

Die erfindungsgemäße Heckscheibe ermöglicht während der Schwenkbewegung eine Entkopplung von der Antriebsverbindung für die Verschiebebewegung. Durch die Entkopplung vom Verschiebeantrieb kann dieser stationär ausgeführt sein, wodurch der Aufbau der Mechanik wesentlich vereinfacht wird.

Vorzugsweise sind weitere, nicht für den Antrieb, sondern nur für eine Führung bei der Verschiebung der Heckscheibe dienende Führungsschienen schwenkbar an einem davor angeordneten hinteren Bereich des festen Fahrzeugdachs angelenkt und mit ihren hinteren Enden mit der Fahrzeugkarosserie verriegelbar.

Gemäß einer weiteren vorteilhaften Ausgestaltung der Erfindung ist vorgesehen, daß die Verriegelung von einem mittels eines vorzugsweise elektrischen Schloßantriebs betätigbaren Schloß gebildet wird.

Vorzugsweise sind die Betätigung des Kupplungselements für eine Freigabe zum Schwenken der Heckscheibe und die Betätigung des Schlosses für die Führungsschienen wirkungsmäßig gekoppelt.

Nachfolgend ist ein Ausführungsbeispiel der Erfindung anhand der Zeichnung beschrieben. Es zeigt:
- Fig. 1: einen schematischen Längsschnitt durch das Fahrzeugdach im geschlossenen Zustand,
- Fig. 2: das Fahrzeugdach gemäß Fig. 1 mit ausgestellter Windabweis-Lamelle und ausgestellter Deckelhinterkante,
- Fig. 3: das Fahrzeugdach gemäß Fig. 2 mit vollständig ausgestelltem Deckel,
- Fig. 4: das Fahrzeugdach gemäß Fig. 3 mit nach hinten verfahrenem Deckel,
- Fig. 5: das Fahrzeugdach gemäß Fig. 3 mit unter den angehobenen Deckel gefahrener Heckscheibe,
- Fig. 6: das Fahrzeugdach gemäß Fig. 1 mit aufgeschwenkter Heckscheibe,
- Fig. 7: einen Längsschnitt durch die seitliche Führung der Heckscheibe,
- Fig. 8: eine vergrößerte Detailansicht des hinteren Endes der Führung gemäß Fig. 7,
- Fig. 9: einen Querschnitt durch die Führungsschiene im Bereich der Kupplung des Verschiebeantriebs,
- Fig. 10: einen Querschnitt durch die Führungsschiene im Bereich der Verriegelung, und
- Fig. 11: eine perspektivische Ansicht von innen und schräg hinten auf die Verriegelung und die Kupplungseinrichtung an der linken Führungsschiene.

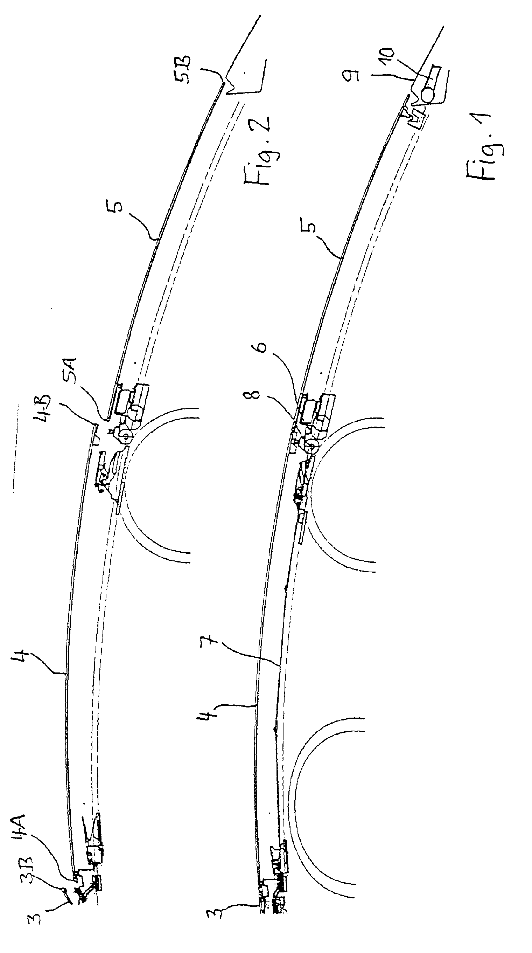

In den Figuren 1 bis 6 sind verschiedene Öffnungspositionen eines insgesamt mit 1 bezeichneten Fahrzeugdachs dargestellt. Das Fahrzeugdach 1 weist ausgehend von einer nicht dargestellten Frontscheibe einen Windlauf 2, eine sich daran anschließende Windabweislamelle 3, einen öffnungsfähigen Deckel 4 und eine vorzugsweise in eine schwenkbare Heckklappe 9 integrierte Heckscheibe 5 auf.

In der geschlossenen Position des Fahrzeugdachs gemäß Fig. 1 schließen sich die vorzugsweise alle aus transparentem Material wie Glas oder Kunststoff bestehenden Elemente Windabweislamelle 3, Deckel 4 und Heckscheibe 5 bündig aneinander an. Dadurch erhält das Fahrzeugdach 1 insgesamt ein glattflächiges Erscheinungsbild. Das Fahrzeugdach 1 ist durch einen nahe der Stoßstelle zwischen der Hinterkante 4B des Deckels 4 und der Vorderkante 5A der Heckscheibe 5 angeordneten Querspriegel 6 zusätzlich versteift.

Zur Abschattung gegen zu intensive Sonneneinstrahlung in den Fahrzeuginnenraum ist unterhalb des Deckels 4 ein Rollo 7 angeordnet, dessen vorderer Zugspriegel über einen bekannten Kabelantrieb mittels eines im Bereich des Querspriegels 6 angeordneten Antriebs 8 in Fahrzeuglängsrichtung verschiebbar ist.

Ausgehend von der geschlossenen Position gemäß Figur 1 ergeben sich eine Vielzahl von möglichen Öffnungs- und Lüfterpositionen des erfindungsgemäßen Fahrzeugdachs. So kann zunächst bei noch geschlossenem Deckel 4 und geschlossener Heckscheibe 5 lediglich die Windabweislamelle 3 mit ihrer Hinterkante 3B nach oben ausgeschwenkt werden. Dadurch ergibt sich ein kleiner Lüftungsspalt nahe der Oberkante der Frontscheibe, der insbesondere in der Übergangszeit und im Winter einen beschlagfreien Lüfterbetrieb im Bereich der Frontscheibe ermöglicht. Zusätzlich kann, wie in Fig. 2 dargestellt, in einem zweiten Schritt die Hinterkante 4B des Deckels 4 in eine Lüfterposition ausgestellt werden, so daß sich zwischen Vorderkante 5A der Heckscheibe 5 und den Deckel 4 ein zweiter Lüftungsspalt einstellt, der insbesondere den hinteren Fahrzeuginsassen zugute kommt.

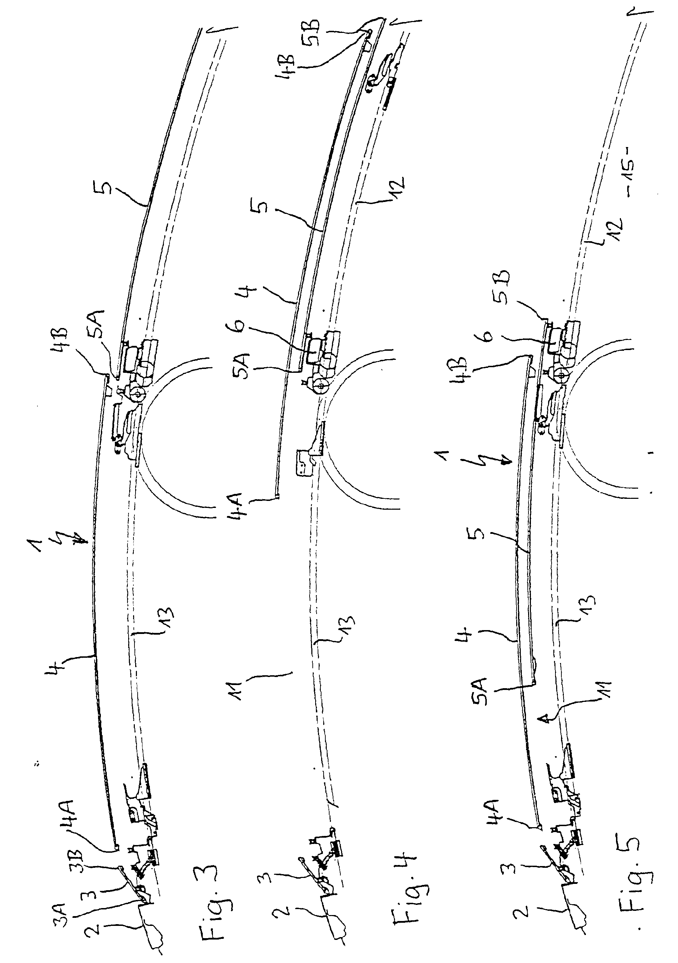

Zur weiteren Öffnung des Deckels 4 kann dieser zusätzlich auch mit seiner Vorderkante 4A angehoben werden, wodurch sich zwischen der Hinterkante 3B der Windabweislamelle und der Vorderkante 4A des Deckels 4 der Lüfterspalt entsprechend vergrößert. Beim Anheben der Vorderkante 4A des Deckels 4 wird dieser vorzugsweise, wie in Fig. 3 gezeigt, gleichzeitig um einen kleinen Betrag nach hinten verschoben.

Der Deckel 4 kann durch einen nicht dargestellten, im Bereich des Windlaufs 2 angeordneten Antrieb in bekannter Weise mittels eines Kabelantriebs längs seitlich der freigegebenen Dachöffnung 11 angeordneter Führungen 13 nach hinten über die Heckscheibe 5 verfahren werden. In Fig. 4 ist die Dachöffnung 11 so weit als möglich freigelegt, d.h., der Deckel 4 befindet sich in seiner am weitesten nach hinten verfahrenen Position, in welcher seine Hinterkante 4B annähernd über der Hinterkante 5B der Heckscheibe 5 liegt.

Alternativ dazu kann ausgehend von der angehobenen Deckelposition gemäß Fig. 3 die Heckscheibe 5 längs einer gestrichelt angedeuteten, insgesamt mit 12 bezeichneten Führung mittels eines Antriebs 10 nach vorne unter den angehobenen Deckel 4 verfahren werden, wie dies in Fig. 5 dargestellt ist. Der Antrieb 10 ist im Bereich eines Versteifungsblechs einer Heckklappe 9 angeordnet, in welche die Heckscheibe 5 und die Führungen 12 integriert sind. Die Führungen 12 liegen dabei auf der gleichen Höhe wie die Führungen 13, längs denen der Dekkel 4 verfahrbar ist. Bei der in Fig. 5 dargestellten nach vorne verfahrenen Position der Heckscheibe 5 liegt deren Hinterkante 5B oberhalb des festen Querspriegels 6, so daß die gesamte hintere Dachöffnung 14 oberhalb eines hinteren Stauraums 15 freigelegt ist. In dieser Position ist der hintere Stauraum 15 bequem von oben her beladbar. Bei umgeklappter Rückbank können somit auch sehr lange Teile im Fahrzeuginnenraum verstaut werden.

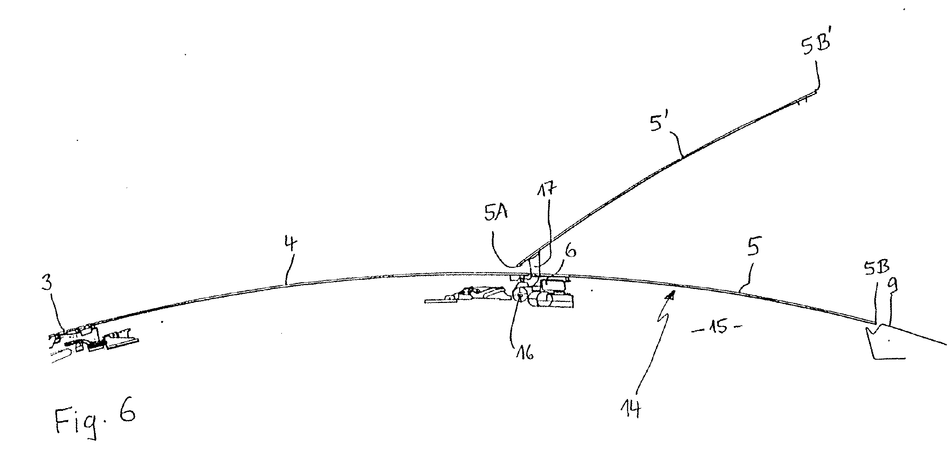

Der durch Innenwände 35 seitlich begrenzte Stauraum 15 ist jedoch nicht nur bei nach vorne verfahrener Heckscheibe 5 beladbar, sondern auch dann, wenn, wie in Fig. 6 gezeigt, die Heckscheibe 5 in eine mit 5 bezeichnete Schwenkstellung verschwenkt wurde, bei der sich ihre Hinterkante 5B erheblich über der Fahrzeugkontur befindet. Zum Verschwenken der Heckscheibe 5 sind Führungsschienen 18, die für eine Führung jedoch nicht für einen Antrieb bei der Längsverschiebung dienen, nahe ihrer Vorderkante 5A mit Schwenkhebeln 17 versehen, die an am Querspriegel 6 oder an seitlichen Holmen angeordneten Drehlagern 16 angelenkt sind.

Mit dem erfindungsgemäßen Fahrzeugdach lassen sich zahlreiche Öffnungsvarianten und Lüftungspositionen realisieren. Dabei ist vorzugsweise auch eine Paketverfahrung des Deckels 4 und der Heckscheibe 5 mittels eines synchronisierten Schaltung ihrer beiden Antriebe möglich.

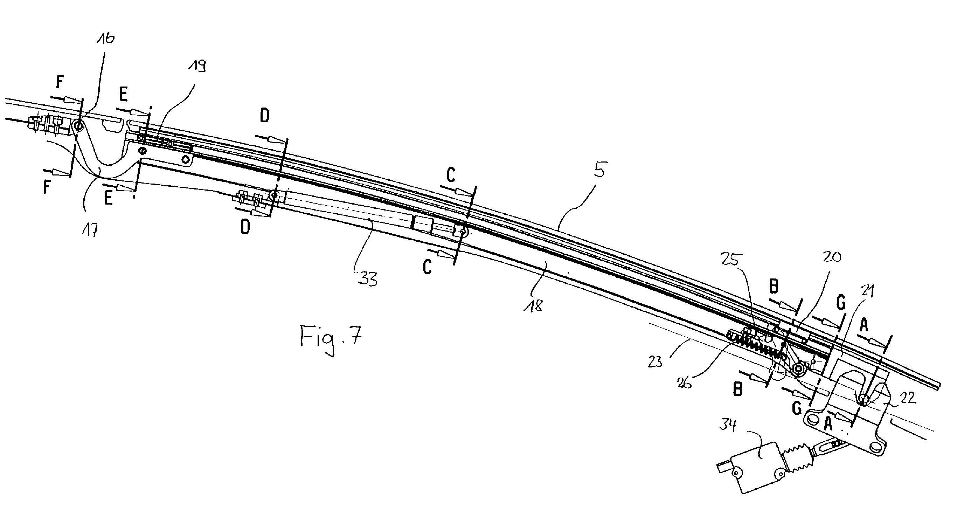

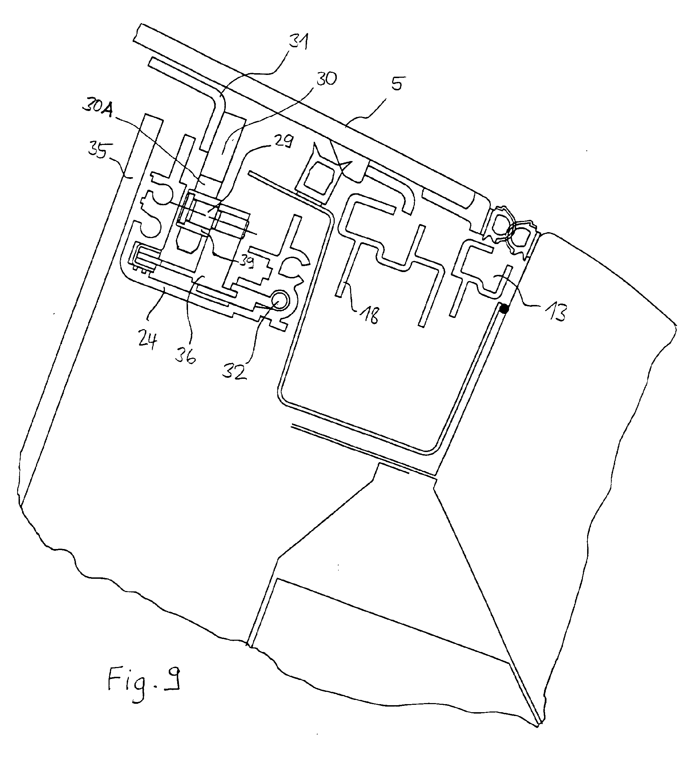

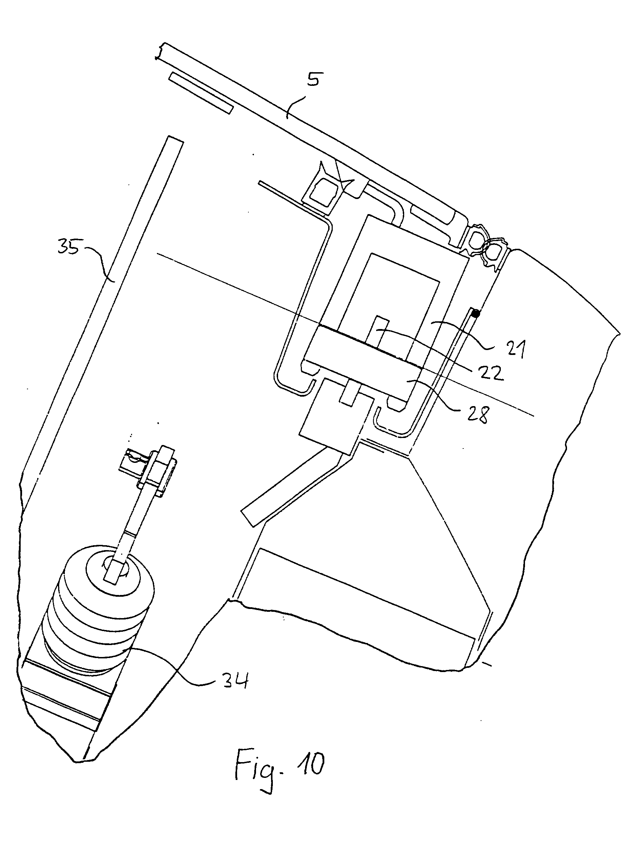

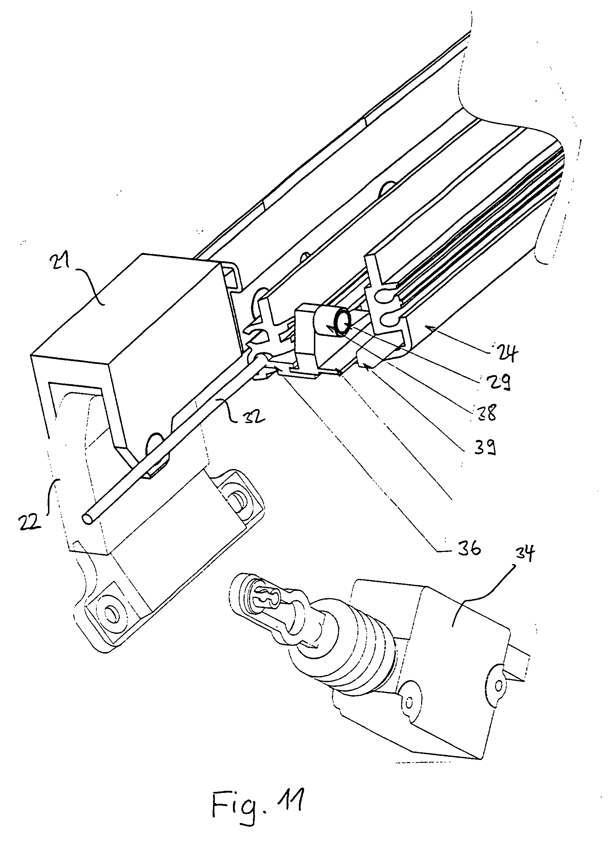

Wie aus den Fign. 7 und 9 ersichtlich, steht die Heckscheibe 5 über ein vorderes Gleitelement 19 und ein hinteres Gleitelement 20 mit der Führungsschiene 18 im Eingriff, die nahe ihrer Vorderkante 5A über Schwenkhebel 17 an karosseriefesten Drehlagern 16 schwenkbar gelagert ist. An ihrem hinteren Ende ist die Führungsschiene 18 mit einem Arretiergehäuse 21 verbunden, welches, wie aus Fig. 10 und 11 zu ersehen, ein nach unten offenes U-Profil aufweist, durch dessen beide seitliche Wangen ein Bolzen 28 hindurchgeführt ist. Der Bolzen 28 wird in einem karosseriefesten Schloß 22 gehalten. Das Schloß 22 weist eine nach oben offene Aussparung auf. Der Bolzen 28 wird zusätzlich von einer nicht dargestellten Schloßfalle mit Widerhaken gehalten, die mittels eines Schloßantriebs 34 zur Freigabe des Bolzens 28 betätigbar sind. Hierzu kann als Schloßantrieb 34 entweder eine manuelle Betätigung, ein Elektromotor oder ein Magnetschalter vorgesehen sein.

Wie aus Fig. 9 zu ersehen, sind seitlich innerhalb der Führungsschienen 18 weitere Führungsschienen 24 angeordnet, in der der Verschiebeantrieb für die Heckscheibe 5 gelagert ist. Dieser setzt sich zusammen aus einem schlittenförmigen Mitnehmer 36, der in der dachfesten Führungsschiene 24 verschiebbar geführt und mittels eines Antriebskabels 32 in Längsrichtung verschiebbar ist. Die Verschiebung des Antriebskabels 32 erfolgt dabei durch den elektrischen Antrieb 10. Am Mitnehmer 36 ist ein Antriebszapfen 29 befestigt, der als Kupplungselement eine Gleitrolle 38 trägt. Mit 39 sind die seitlichen Gleitschuhe des Mitnehmers 36 bezeichnet. Die Gleitrolle 38 greift von unten her in eine als Gegen-Kupplungselement fungierende, nach unten offene Aussparung 30A eines Bügels 30 ein, welcher über ein Innenblech 31 an der Unterseite der Heckscheibe 5 befestigt ist. Die Vorder- und Rückwand der Aussparung 30A bilden die Mitnahmeflächen für die Gleitrolle 38.

Beim Schwenken der Heckscheibe 5 kann der Bügel 30 mit der Aussparung 30A unbehindert in vertikaler Richtung von der Gleitrolle 38 weg nach oben schwenken. Bei geschlossener oder nach vorn verschobener Heckscheibe 5 wird diese durch die Gleitelemente 19 und 20 und die mittels des Arretiergehäuses 21 arretierte Führungsschiene 18 in ihrer vertikalen Position gehalten. Dabei ist die Heckscheibe 5 durch den Eingriff der Gleitrolle 38 am Mitnehmer 36 in Längsrichtung verschiebbar.

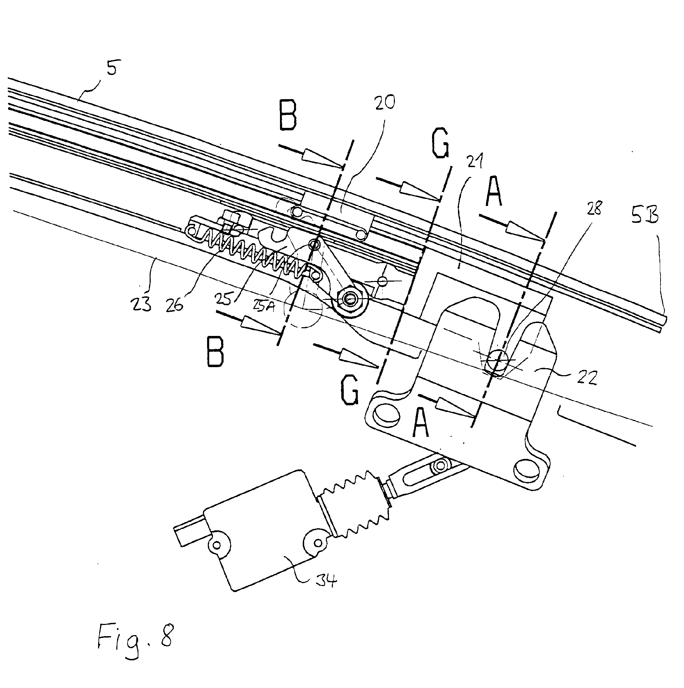

Zum Verschwenken der Heckscheibe 5 muss diese sich in der vollständig geschlossenen, d.h. ganz nach hinten verfahrenen Position befinden. Dies wird über einen nicht dargestellten Kontakt geprüft. In dieser Position kann das Schloß 22 mittels des Schloßantriebs 34 gelöst werden, so dass das Arretiergehäuse 21 und mit ihm die Führungsschiene 18 um das Drehlager 16 schwenkbar wird. Da beim Schwenken die Aussparung 30A des Bügels 30 außer Eingriff mit der Gleitrolle 38 am Mitnehmer 36 gerät, muss die Heckscheibe 5 während der Verschwenkbewegung zusätzlich gegen eine Längsverschiebung gesichert werden. Diese Aufgabe übernimmt der insbesondere in Fig. 8 dargestellte Arretierhebel 25. Dieser ist mit einem Drehlager 25A an der Führungsschiene 18 gelagert. Er weist an seinem nach vorne gerichteten Ende an der Oberseite eine klauenartige Aussparung auf, welche in der gestrichelt dargestellten Verriegelungsposition einen Zapfen am hinteren Gleitelement 20 umgreift und somit die Heckscheibe 5 gegen eine Verschiebung in Längsrichtung sichert. Das andere Ende des Arretierhebels 25 ist mit einer Rolle an einer Rampe eines karosseriefesten Rahmens 23 abgestützt. Eine Feder 26 beaufschlagt den Arretierhebel 25 in eine Drehrichtung im Uhrzeigersinn, d.h. in die Arretierposition gegenüber dem Gleitelement 20. Bei Abheben der Hinterkante 5B der Heckscheibe 5 mitsamt der Führungsschiene 18 gerät die Rolle am hinteren Ende des Arretierhebels 25 außer Eingriff von der Rampe am Rahmen 23 und führt dabei eine Schwenkbewegung im Uhrzeigersinn aus von der nicht arretierten Position (in durchgezogenen Linien) in die Arretierposition (in gestrichelten Linien).

Die Heckscheibe 5 wird in ausgestelltem Zustand durch Gasdruckfedern 33 an beiden Seiten abgestützt.

### Bezugszeichenliste

- 1: Fahrzeugdach
- 2: Windlauf
- 3: Windabweislamelle
- 3A: Vorderkante (von 3)
- 3B: Hinterkante (von 3)
- 4: Deckel
- 4A: Vorderkante (von 4)
- 4B: Hinterkante (von 4)
- 5: Heckscheibe
- 5A: Vorderkante (von 5)
- 5B: Hinterkante (von 5)
- 6: Querspriegel
- 7: Rollo
- 8: Antrieb (für 7)
- 9: Heckklappe
- 10: Antrieb (von 5)
- 11: Dachöffnung
- 12: Führung (von 5)
- 13: Führung (von 4)
- 14: Hintere Dachöffnung
- 15: Hinterer Stauraum
- 16: Drehlager
- 17: Schwenkhebel
- 18: Führungsschiene (von 5)
- 19: Gleitelement (an 5)
- 20: Gleitelement (an 5)
- 21: Arretiergehäuse
- 22: Schloß
- 23: Rahmen
- 24: Führungsschiene
- 25: Arretierhebel
- 25A: Drehlager (von 25)
- 25B: Anlenkung
- 26: Feder
- 28: Bolzen
- 29: Antriebszapfen
- 30: Bügel
- 30A: Aussparung (an 30)
- 31: Innenblech (an 5)
- 32: Antriebskabel
- 33: Gasdruckfeder
- 34: Schloßantrieb
- 35: Innenwand (von 15)
- 36: Mitnehmer
- 38: Gleitrolle (an 29)
- 39: Gleitschuh (an 36)

## Patentansprüche

1. Schwenkbare und verschiebbare Heckscheibe (5) an einer Karosserie eines Fahrzeugs, deren Verschiebebewegung mittels eines elektrischen Antriebs (10) erfolgt, **dadurch gekennzeichnet, daß** die Heckscheibe (5) mit dem Antrieb (10) bei geschlossener oder verschobener Heckscheibe (5) über wenigstens ein in einer dachfesten Führungsschiene (24) verschiebbar geführtes Kupplungselement (Mitnehmer 36, Antriebszapfen 29) und ein mit der der Heckscheibe verbundenes Gegen- Kupplungselement (Bügel 30, Aussparung 30A) gekoppelt ist, das für eine Schwenkbewegung der Heckscheibe (5) vom Kupplungselement (36, 29) lösbar ist.

2. Heckscheibe nach Anspruch 1, **dadurch gekennzeichnet, daß** die Heckscheibe (5) mittels Gleitelementen (19, 20) in weiteren Führungsschienen (18) geführt ist, die mit ihrem vorderen Ende schwenkbar an einem hinteren Bereich (bei 16) des Fahrzeugdachs (1) angelenkt sind und ferner mit ihrem hinteren Ende (bei 21) mit der Fahrzeugkarosserie verriegelbar sind.

3. Heckscheibe nach Anspruch 2, **dadurch gekennzeichnet, daß** die Verriegelung von einem mittels eines Schloßantriebs (34) betätigbaren Schloß (22) gebildet wird.

4. Heckscheibe nach wenigstens einem der vorhergehenden Ansprüche, **dadurch gekennzeichnet, daß** die Eingriffsstellungen des Kupplungselements (29) und der Verriegelung (Schloß 22) wirkungsmäßig gekoppelt sind.

5. Heckscheibe nach einem der Ansprüche 2 bis 4, **dadurch gekennzeichnet, daß** diese während der Schwenkbewegung mittels einer Arretiereinrichtung (Arretierhebel 25) gegen eine Längsverschiebung gegenüber der Führungsschiene (18) gesichert ist.

6. Heckscheibe nach Anspruch 5, **dadurch gekennzeichnet, daß** die Arretiereinrichtung (Arretierhebel 25) mittels eines Federelements (26) in eine Eingriffsstellung mit einem Gleitelement (20) vorbelastet ist.

7. Heckscheibe nach wenigstens einem der vorhergehenden Ansprüche, **dadurch gekennzeichnet, daß** die schwenkbaren Führungsschienen (18) in Querrichtung des Fahrzeugs außen liegend zu den dachfesten Führungsschienen (24) angeordnet sind.
